# EUROPEAN PATENT SPECIFICATION

(11) **EP 0 800 934 B1**
(45) Date of publication and mention of the grant of the patent: **18.12.2002**
(21) Application number: 97830076.2
(22) Date of filing: 24.02.1997
(51) Int. Cl.: B60B 33/00

(54) **Safety castor wheel for furniture articles**
Sicherheitslenkrolle für Möbel
Roulette de sécurité pour meubles

(30) Priority: 10.04.1996 IT MI960683
(43) Date of publication of application: 15.10.1997
(73) Proprietor: O.G.T.M. Officine Meccaniche S.r.l., 20079 Sant'Angelo Lodigiano (Milano) (IT)
(72) Inventor: Trevini, Ruggero, 20079 Sant'Angelo Lodigiano (Milano) (IT)
(74) Representative: Cicogna, Franco

(56) References cited:
- EP-A- 0 361 007
- EP-A- 0 372 855
- EP-A- 0 650 854
- GB-A- 2 290 954
- US-A- 4 333 207
- US-A- 4 664 231
- US-A- 4 941 552

## Description

### BACKGROUND OF THE INVENTION

The present invention relates to a safety castor wheel which has been specifically designed for furniture articles and the like, and, in particular, for bed articles.

Safety castor wheels for furniture pieces or articles are already known, which generally comprise a supporting element which can be associated with the furniture article and which rotatably supports, about a substantially horizontal axis, at least a castor wheel.

Safety castor wheels are moreover known including a locking device which can be actuated or deactuated in order allow or prevent the castor wheel from turning, depending on requirements.

A safety castor wheel according to the preamble of claim 1 is known from EP-A-0650854.

Some types of at present commercially available safety castor wheels have the drawback that they do not provide a proper safety against an accidental deactuating of the locking device, after the actuating thereof.

Yet other safety castor wheels are comparatively complex construction wise, which negatively affects their making costs.

### SUMMARY OF THE INVENTION

Accordingly, the aim of the present invention is to overcome the above mentioned problem, by providing a safety castor wheel, which, while having a very simple construction, provides a good safety against a possible accidental disengaging of the castor wheel locking device.

Within the scope of the above mentioned aim, a main object of the present invention is to provide such a safety castor wheel which can be made at a competitive cost.

Yet another object of the present invention is to provide such a safety castor wheel, which can be easily assembled on a broad range of furniture articles or pieces such as beds, tables, small tables as well as patient transporting beds, emergency small beds and the like.

A further object of the present invention is to provide such a safety castor wheel which has such a mechanical strength as to be very reliable in operation and have a long duration.

According to one aspect of the present invention, the above mentioned aim and objects, as well as yet other objects, which will become more apparent hereinafter, are achieved by a safety castor wheel, for furniture articles and the like, according to claim 1.

Further embodiments of castor wheels according to the invention are disclosed in the dependent claims.

### BRIEF DESCRIPTION OF THE DRAWINGS

Further characteristics and advantages of the safety castor wheel according to the present invention will become more apparent hereinafter from the following detailed disclosure of a preferred, though not exclusive, embodiment of said safety castor wheel which is illustrated, by way of an indicative, but not limitative, example, in the accompanying drawings, where:

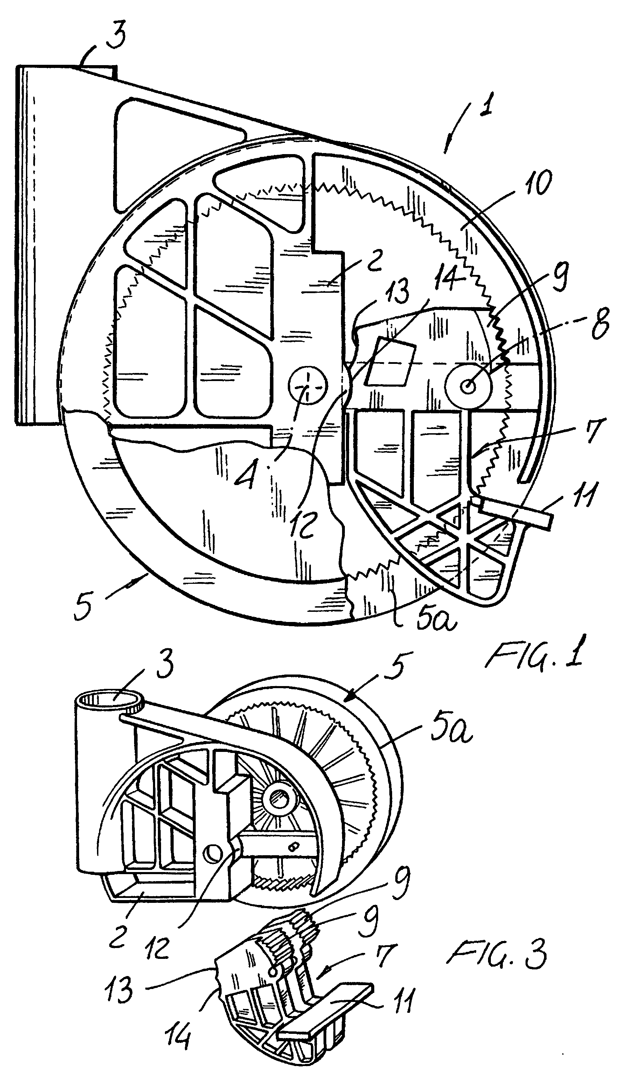

Figure 1 is an elevation partially cross-sectioned view illustrating the safety castor wheel according to the present invention, with the locking element thereof in a castor wheel engaging condition;
Figure 2 illustrates, by a similar view to figure 1, the subject castor wheel with the locking element thereof being disengaged from the castor wheel;
Figure 3 is an exploded perspective view illustrating some of the component elements of the safety castor wheel according to the present invention;
Figure 4 is a front elevation view of the safety castor wheel according to the present invention;
   and
Figure 5 is a partially cross-sectioned front elevation view illustrating the safety castor wheel according to the present invention.

### DESCRIPTION OF THE PREFERRED EMBODIMENTS

With reference to the number references of the above mentioned drawing figures, the safety castor wheel according to the present invention, which has been generally indicated by the reference number 1, comprises a supporting element 2, which can be associated with the furniture article or piece to be equipped by the safety castor wheel, by using, for example, a suitably designed cylindric seat 3 formed in the supporting element 2 and adapted to be engaged with a pin element coupled, in a per se known manner, to the furniture article.

In particular, the connection of said pin element with the seat 3 can be of a rotary type, so as to allow the castor wheel 1 to turn and spin about the pivot pin thereof.

The supporting element 2, as shown, supports, in a rotary manner about a substantially horizontal rotary axis 4, at least a wheel element 5.

More specifically, the wheel element 5 comprises preferably a pair of wheels proper 5a and 5b, coaxial to one another, and of like diameter, said wheels 5a and 5b being rotatably supported about the rotary axis 4 of the supporting element 2, by a pivot pin 6.

The safety castor wheel according to the present invention comprises moreover a lever locking element 7 which is pivoted, at a middle portion thereof, to the supporting element 2, about an axis 8 parallel to and spaced from the rotary axis 4.

The locking element 7, in particular, is provided with an end portion thereof including a tooth arrangement 9 which can be engaged with or disengaged from, by causing the locking element 7 to swing about the axis or fulcrum 8 thereof, a gear ring 10, rigid with the wheel element 5.

The other end portion 11 of the locking element 7 has a pedal arrangement and projects from the assembly constituted by the wheel element 5 and supporting element 2, so as to be adapted for operation by an user, for example in a very simple manner, by a foot of the user, in order to cause the locking element 7 to swing about the fulcrum or rotary axis 8, in a direction or in the other, thereby causing the tooth arrangement 9 to engage with or disengage from the gear ring 10.

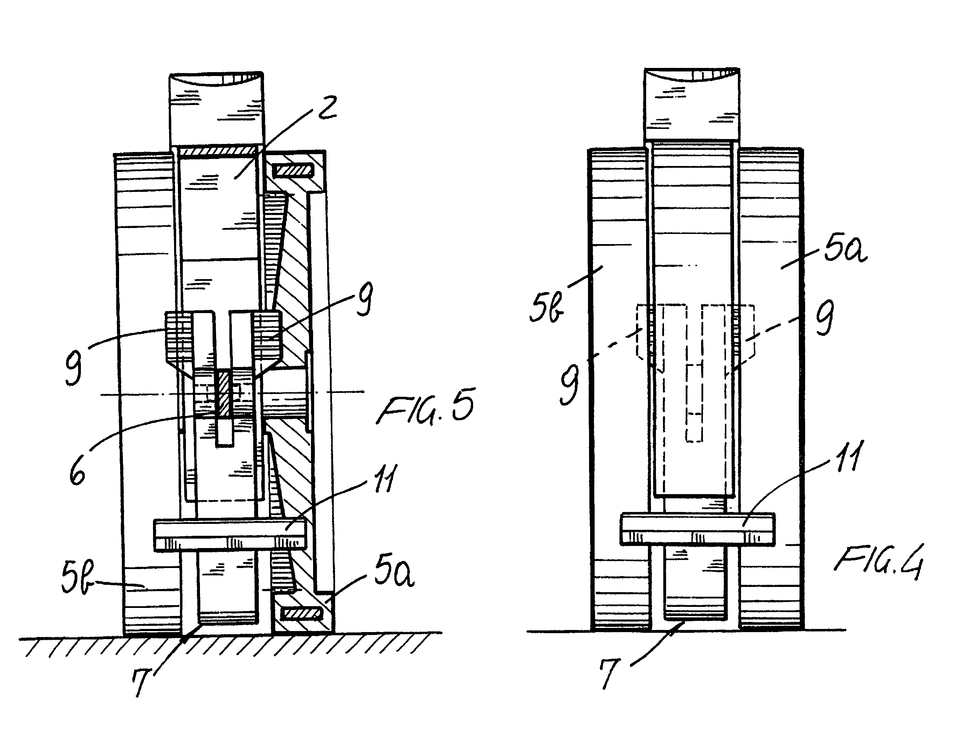

In the safety castor wheel according to the present invention, the two wheels 5a and 5b are provided with a gear ring 10, and the locking element 7 is provided with two twin tooth arrangements 9, as shown in a very clear manner in figure 3, which are provided to respectively engage with the tooth arrangement 10 of the wheel 5a and the tooth arrangement 10 of the wheel 5b.

Moreover, the locking element 7 is supported by the supporting element 2, at a region included between the two wheels 5a and 5b.

The safety castor wheel according to the present invention comprises moreover restraining means for restraining the locking element 7 at the engagement and disengagement positions thereof with respect to the gear ring 10.

These restraining means, in particular, comprise a ridge 12 formed on the supporting element 2 and which can be selectively connected to one of the two recesses 13 and 14 formed in the locking element 7 at two angularly spaced regions thereof, about the rotary axis or fulcrum 8.

Preferably, it will be possible to provide two twin ridges 12 or, as shown, two recesses 13 and two recesses 14 on the locking element 7, in an analogous manner to that disclosed with respect to the tooth arrangement 9, in view of the provision of two wheels 5a and 5b.

More specifically the ridges or projections 12 and the recesses 13 and 14 have preferably curved shapes, mating with one another, so as to provide a proper coupling or engaging of the ridges 12 and recesses 13 and 14, thereby providing very good safety properties against a possible accidental swinging of the locking element 7 about the fulcrum or rotary axis 8 thereof.

In this connection it should be pointed out that the two wheels 5a and 5b, the supporting element 2 and the locking element 7 are preferably made of a molded synthetic or plastic material, thereby they can be constructed at a very reduced cost.

The operating of the safety castor wheel according to the present invention is as follows.

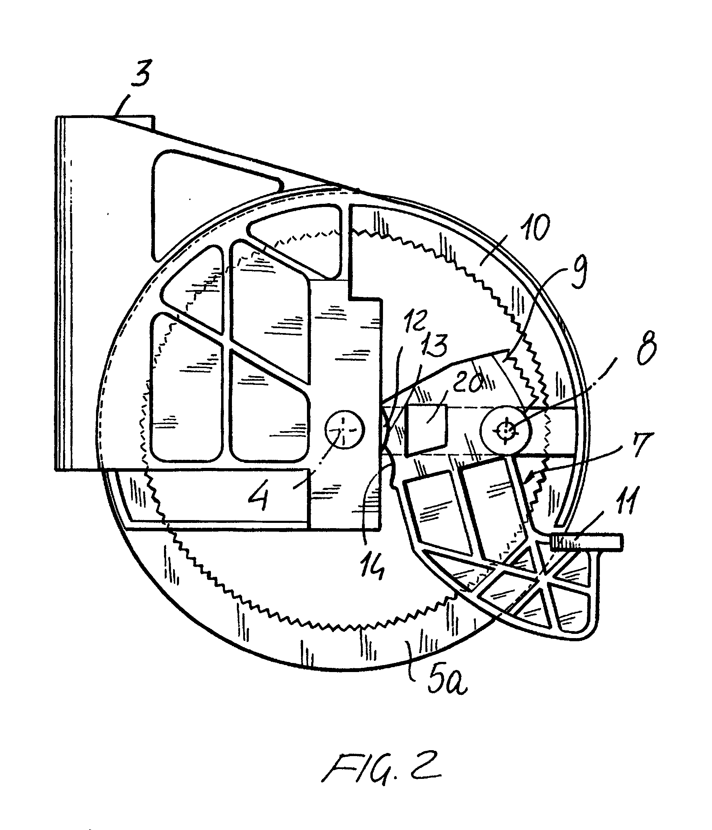

As it is required to turn the wheels 5a and 5b so as to allow the furniture article including the safety castor wheel to be easily displaced, then the locking element 7 will be arranged at the position thereof shown in figure 2, i.e. in which its tooth arrangement 9 is disengaged by the gear ring 10.

With the locking element in this condition, the wheels 5a and 5b can turn, in an idle manner, about the rotary axis 4.

The locking element 7, in particular, can be held in this position by coupling the recess 13 and ridge 12.

As the wheels 5a and 5b must be locked, then the end portion 11 of the locking element 7 will be actuated so as to cause the locking element to swing about the fulcrum 8, thereby causing the tooth arrangement 9 to engage with the gear ring 10 of the wheels 5a and 5b.

The locking element 7, in particular, can be held in the engagement condition thereof, in which it engages with the gear ring 10, by coupling the recess 14 and the ridge 12.

In this connection it should be moreover pointed out that the locking element 7 is moreover provided with a slot 20 operating for providing resiliency properties to that end portion of the locking element 7 in which are formed the two recesses 13 and 14 therein are engaged the two ridges 12.

This resiliency will allow a limited displacement of the bed or furniture article as it is subjected to an accidental impact by an user, so as to automatically return to a braking position thereof.

Such a result will be assured by the resiliency of the mentioned portion of the locking element 7, provided to said element by the provision of the slot 20.

From the above disclosure and from the several figures of the accompanying drawings it should be apparent that the invention fully achieves the intended aim and objects.

In particular, the fact is to be pointed out that a safety castor wheel has been provided which has a very simple construction, while providing very good properties against an accidental locking and unlocking thereof.

While the safety castor wheel according to the present invention has been hereinabove disclosed with reference to preferred embodiments thereof, it should be apparent that the disclosed embodiments are susceptible to several modifications and variations all of which will come within the scope of the appended claims.

## Claims

1. A safety castor wheel (1), for furniture articles and the like, comprising a supporting element (2) which can be associated with said furniture article and which rotatably supports, about a substantially horizontal axis, at least a wheel element (5), a locking element (7) pivoted about a parallel axis to the axis (4) of the wheel element, said locking element (7) including an end portion provided with a tooth arrangement (9) which can be engaged with or disengaged from, by causing said locking element (7) to swing about the pivot pin thereof, a gear ring (10) rigid with said wheel element (5), the other end portion (11) of said locking element (7) outwardly projecting of the wheel element (5)-supporting element (2) assembly, restraining means for restraining said locking element (7) of the engagement and disengagement positions thereof with respect to said gear ring (10), **characterized in that** said locking element (7) pivots at a middle portion thereof to said supporting element (2) about a pivot pin (8) parallel to and spaced from said rotary axis (4), and that said locking element (7) comprises a slot (20) operating to make resilient an end portion of said locking element (7) in which are defined two angularly spaced recess means (13, 14) in which can be selectively engaged ridge means (12) formed on said supporting element (2), said recess and ridge means pertaining to said restraining means.

2. A safety castor wheel, according to Claim 1, **characterized in that** said two recess means (13, 14) comprise two first recesses (13) and two second recesses (14) on said locking element (7) and said ridge means comprise two twin ridges (12).

3. A safety castor wheel, according to Claim 1, **characterized in that** the axis of said gear ring coincides with the axis of said wheel element (5).

4. A safety castor wheel, according to Claim 1, **characterized in that** said wheel element (5) comprises a pair of coaxial wheels (5a, 5b), of like diameter, each said wheels including a gear ring (5) which can be engaged by said locking element (7).

5. A safety castor wheel, according to Claim 1, **characterized in that** the other end portion (11) of said locking element has a pedal shape.

6. A safety castor wheel, according to Claim 4, **characterized in that** said locking element (7) is supported by said supporting element between said pair of wheels (5a, 5b).

7. A safety castor wheel, according to Claim 1, **characterized in that** said supporting element (2) is provided with a vertical axis seat (3) for receiving a connection pin for connection with said furniture article.

8. A safety castor wheel, according to any of the preceding claims, **characterized in that** said supporting element (2), locking element (7) and said wheels (5) are made of a plastic material.

## Patentansprüche

1. Sicherheitslaufrolle (1) für Möbelgegenstände und dgl., mit einem Trägerelement (2), das mit dem Möbelgegenstand verbindbar ist und das um eine im wesentlichen horizontale Achse drehbar mindestens ein Radelement (5), ein um eine Parallelachse zu der Achse (4) des Radelementes schwenkbares Arretierelement (7) aufweist, wobei das Arretierelement (7) einen mit einer Zahnanordnung (9) versehenen Endabschnitt aufweist, der durch Veranlassen des Arretierelementes (7) zum Schwingen um dessen Gelenkbolzen mit einem starr mit dem Radelement (5) verbundenen Zahnrad (10) in Eingriff bringbar oder außer Eingriff bringbar ist, wobei der andere Endabschnitt (11) des Arretierelementes (7) von der Radelement (5)-Trägerelement (2)-Baugruppe nach außen hervorsteht, und mit Rückhaltemittel zum Zurückhalten des Arretierelementes (7) von den in Eingriff und außer Eingriff befindlichen Positionen desselben im Verhältnis zu dem Zahnrad (10),
**dadurch gekennzeichnet, daß**
sich das Arretierelement (7) an seinem Mittelteil zu dem Trägerelement (2) um einen parallel zu der Drehachse (4) verlaufenden und von ihr beabstandeten Drehbolzen (8) dreht, und daß das Arretierelement (7) einen Schlitz (20) aufweist, der so wirkt, daß ein Endabschnitt des Arretierelementes (7) federnd wird, in dem zwei winklig voneinander beabstandete Aussparungsmittel (13,14) definiert sind, in denen auf dem Trägerelement (2) ausgebildete Höckereinrichtungen (12) selektiv in Eingriff bringbar sind, wobei die Aussparungs- und Höckereinrichtungen zu den Rückhaltemitteln gehören.

2. Sicherheitslaufrolle nach Anspruch 1,
**dadurch gekennzeichnet, daß**
die zwei Aussparungsmittel (13,14) zwei erste Aussparungen (13) und zwei zweite Aussparungen (14) auf dem Arretierelement (7) umfassen und daß die Höckereinrichtung zwei Höcker (12) umfasst.

3. Sicherheitslaufrolle nach Anspruch 1,
**dadurch gekennzeichnet, daß**
die Achse des Zahnrades mit der Achse des Radelementes (5) übereinstimmt.

4. Sicherheitslaufrolle nach Anspruch 1,
**dadurch gekennzeichnet, daß**
das Radelement (5) ein Paar koaxialer Räder (5a,5b) mit gleichem Durchmesser umfaßt, wobei die Räder ein Zahnrad (5) umfassen, das von dem Arretierelement (7) in Eingriff genommen werden kann.

5. Sicherheitslaufrolle nach Anspruch 1,
**dadurch gekennzeichnet, daß**
der andere Endabschnitt (11) des Arretierelementes pedalförmig ist.

6. Sicherheitslaufrolle nach Anspruch 4,
**dadurch gekennzeichnet, daß**
das Arretierelement (7) durch das zwischen dem Paar von Rädern (5a,5b) angeordnete Trägerelement getragen ist.

7. Sicherheitslaufrolle nach Anspruch 1,
**dadurch gekennzeichnet, daß**
das Trägerelement (2) mit einem Vertikalachslager (3) zur Aufnahme eines Verbindungsstiftes zum Verbinden mit dem Möbelgegenstand versehen ist.

8. Sicherheitslaufrolle nach einem der vorangegangenen Ansprüche,
**dadurch gekennzeichnet, daß**
das Trägerelement (2), Arretierelement (7) und die Räder (5) aus einem Kunststoffmaterial hergestellt sind.

## Revendications

1. Roulette de sécurité (1), pour meubles et semblables, comprenant un élément de support (2) qui peut être associé audit meuble et qui supporte de manière rotative, autour d'un axe sensiblement horizontal, au moins un élément de type roue (5), un élément de verrouillage (7) pivotant autour d'un axe parallèle à l'axe (4) de l'élément de type roue, ledit élément de verrouillage (7) incluant une partie d'extrémité munie d'une configuration dentée (9) qui peut être engagée avec ou désengager de, en faisant que ledit élément de verrouillage (7) se balance autour d'une broche de pivot, un anneau denté (10) engagé de manière rigide avec ledit élément de type roue (5), l'autre partie d'extrémité (11) dudit élément de verrouillage (7) saillante vers l'extérieur de l'élément de type roue (5) -l'élément de support (2), un moyen de retenue pour retenir ledit élément de verrouillage (7) des positions d'engagement et de désengagement de celui-ci par rapport audit anneau denté (10), **caractérisée en ce que** ledit élément de verrouillage (7) pivote à une partie centrale de celui-ci par rapport audit élément de support (2) autour d'une broche de pivot (8) parallèle à et espacée dudit axe de rotation (4), et **en ce que** ledit élément de verrouillage (7) comprend une fente (20) étudiée pour rendre résilient une partie d'extrémité dudit élément de verrouillage (7) dans lequel sont définis deux moyens d'encoche angulaires espacés (13, 14) dans lesquels peut être de manière sélective engagé un moyen de type rebord (12) formé sur ledit élément de support (2), lesdits moyens d'encoche et de rebord appartenant audits moyens de retenue.

2. Roulette de sécurité, selon la revendication 1, **caractérisée en ce que** lesdits deux moyens d'encoche (13, 14) comprennent deux premières encoches (13) et deux secondes encoches (14) sur ledit élément de verrouillage (7) et ledit moyen de rebord comprend deux rebords identiques (12).

3. Roulette de sécurité, selon la revendication 1, **caractérisée en ce que** l'axe dudit anneau denté coïncide avec l'axe dudit élément de type roue (5).

4. Roulette de sécurité, selon la revendication 1, **caractérisée en ce que** l'élément de type roue (5) comprend une paire de roues coaxiales (5a, 5b), de même diamètre, chacune de ces dites roues incluant un anneau denté (5) qui peut être engagé par ledit élément de verrouillage (7).

5. Roulette de sécurité, selon la revendication 1, **caractérisée en ce que** l'autre partie d'extrémité (11) dudit élément de verrouillage présente une forme en pédale.

6. Roulette de sécurité, selon la revendication 4, **caractérisée en ce que** ledit élément de verrouillage (7) est supporté par ledit élément de support entre ladite paire de roues (5a, 5b).

7. Roulette de sécurité, selon la revendication 1, **caractérisée en ce que** ledit élément de support (2) est muni d'un logement d'axe vertical (3) pour recevoir une broche de connexion pour une connexion avec ledit meuble.

8. Roulette de sécurité, selon l'une quelconque des revendications précédentes, **caractérisée en ce que** ledit élément de support (2), ledit élément de verrouillage (7) et lesdites roues (5) sont fabriqués à partir d'un matériau plastique.
